# EUROPEAN PATENT SPECIFICATION

(11) **EP 1 473 144 B1**
(45) Date of publication and mention of the grant of the patent: **17.08.2005**
(21) Application number: 03252584.2
(22) Date of filing: 24.04.2003
(51) Int. Cl.: B29D 31/508, B29C 51/00, A43B 9/16

(54) **Method for making an article of footwear**
Herstellungsverfahren eines Schuhwerks
Procédé de fabrication d'un article chaussant

(43) Date of publication of application: 03.11.2004
(73) Proprietor: Chi, Cheng-Hsian, Taichung City (TW)
(72) Inventor: Chi, Cheng-Hsian, Taichung City (TW)
(74) Representative: Lamb, Martin John Carstairs

(56) References cited:
- WO-A-95/22265
- GB-A- 473 611
- GB-A- 659 052
- GB-A- 826 378
- US-A- 3 913 160

## Description

This invention relates to a method for making an article of footwear, more particularly to a method for making an article of footwear that has an outsole including a thermoplastic skin and a filler pad surrounded by and bonded to the thermoplastic skin.

A conventional method for making an article of footwear normally involves thermal molding of an assembly of an upper, an insole or a midsole, and an outsole in a mold such that the midsole or the outsole is softened during the molding operation for bonding to the upper. The conventional method is disadvantageous in that the time required for softening the midsole or the outsole is relatively long by virtue of the relatively large thickness of the midsole or the outsole. GB-A-826 378 shows such a method.

Therefore, the object of the present invention is to provide a method for making an article of footwear that is capable of overcoming the aforementioned drawback.

According to the present invention, there is provided a method for making an article of footwear. The method comprises the steps of: preparing an upper that has a bottom peripheral edge; preparing a thermoplastic skin that has a base wall and a peripheral wall which extends from a periphery of the base wall in a transverse direction relative to the base wall and which confines an inner space therein, the peripheral wall having a shape that conforms to that of the bottom peripheral edge of the upper; preparing a filler pad that has a shape conforming to that of the base wall; mounting the upper on a last; preheating the thermoplastic skin to a softened state; and thermal molding the softened thermoplastic skin together with an assembly of the filler pad and the upper in a mold in such a manner that the peripheral wall of the thermoplastic skin is patterned and is bonded to the bottom peripheral edge of the upper and that the filler pad is fittingly received in the inner space and is bonded to the base wall and the peripheral wall of the thermoplastic skin.

In the drawings which illustrate embodiments of the invention,
Fig. 1 is a block diagram illustrating consecutive steps of the first preferred embodiment of a method according to this invention for making an article of footwear;
Fig. 2 is a sectional view to illustrate how a filler pad is enclosed in a space between an upper and a skin of the article of footwear according to the first preferred embodiment of this invention;
Fig. 3 is a sectional view showing the filler pad of Fig. 2, which is made from two different materials;
Fig. 4 is a sectional view showing a wear-resistant pad, which is attached to a bottom of the skin of Fig. 2;
Fig. 5 is a block diagram illustrating consecutive steps of the second preferred embodiment of the method according to this invention;
Fig. 6 is a sectional view to illustrate how the skin is connected to the upper of the article of footwear according to the second preferred embodiment of this invention;
Fig. 7 is a sectional side view showing an article of footwear, which is modified from that of Fig. 6, and which includes reinforcing ribs formed on the skin;
Fig. 8 is a sectional bottom view showing the reinforcing ribs of Fig. 7; and
Fig. 9 is a sectional view to illustrate how the skin is connected to the upper of the article of footwear according to the third preferred embodiment of this invention.

For the sake of brevity, like elements are denoted by the same reference numerals throughout the disclosure.

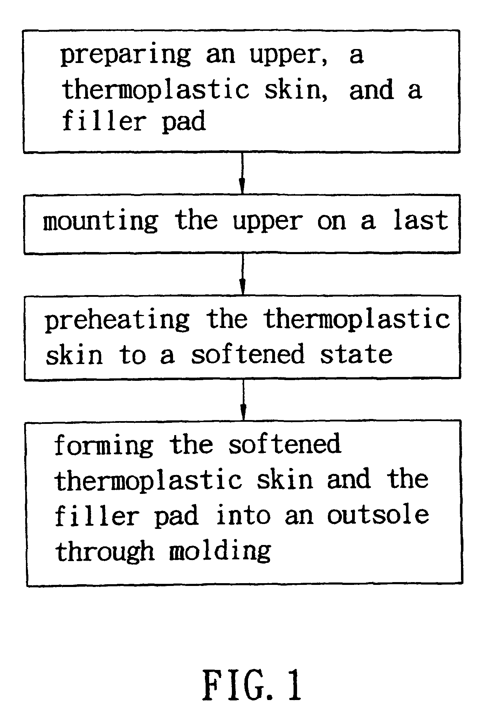

Fig. 1 is a block diagram showing consecutive steps of the first preferred embodiment of a method of this invention for making an article of footwear.

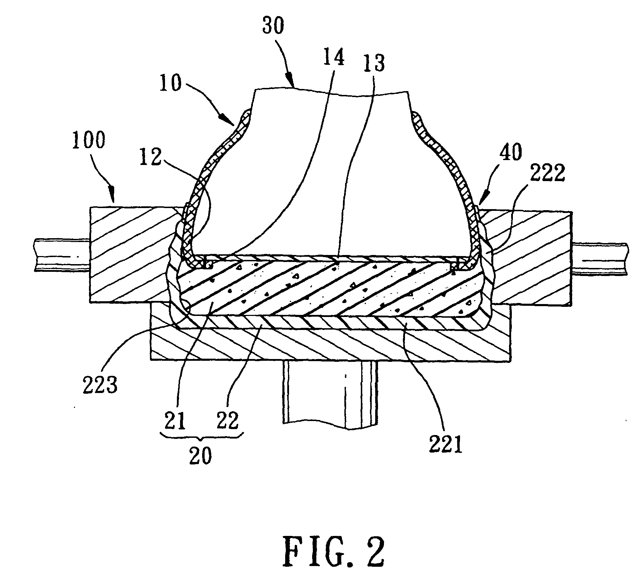

With reference to Fig. 2, the method includes the steps of: preparing an upper 10 that has a bottom peripheral edge 12 confining a bottom opening 14; applying an adhesive to a peripheral wall of the upper 10; binding an insole 13 to the bottom peripheral edge 12 of the upper 10; preparing a thermoplastic skin 22 that has a base wall 221 and a peripheral wall 222 which extends from a periphery of the base wall 221 in a transverse direction relative to the base wall 221 and which confines an inner space 223 therein, the peripheral wall 222 having a shape that conforms to that of the bottom peripheral edge 12 of the upper 10 ; preparing a filler pad 21 that has a shape conforming to that of the base wall 221; mounting the upper 10 on a last 30; attaching a tape 40 on the peripheral wall of the upper 10 above the bottom peripheral edge 12 of the upper 10 for preventing formation of flash on the peripheral wall of the upper 10; preheating the thermoplastic skin 22 to a softened state; thermal molding the softened thermoplastic skin 22 together with an assembly of the filler pad 21, the insole 13, the upper 10 and the tape 40 in a mold 100 in such a manner that the peripheral wall 222 of the thermoplastic skin 22 is patterned and is bonded to the bottom peripheral edge 12 of the upper 10 and that the filler pad 21 is fittingly received in the inner space 223 and is bonded to the base wall 221 and the peripheral wall 222 of the thermoplastic skin 22 so as to cooperate with the thermoplastic skin 22 to form an outsole 20 of the article of footwear; cooling the mold 100; removing the resultant article of footwear from the mold 100; trimming the article of footwear; and removing the tape 40 from the article of footwear. The preheating operation of the thermoplastic skin 22 can be carried out in the mold 100 so as to reduce the manufacturing time.

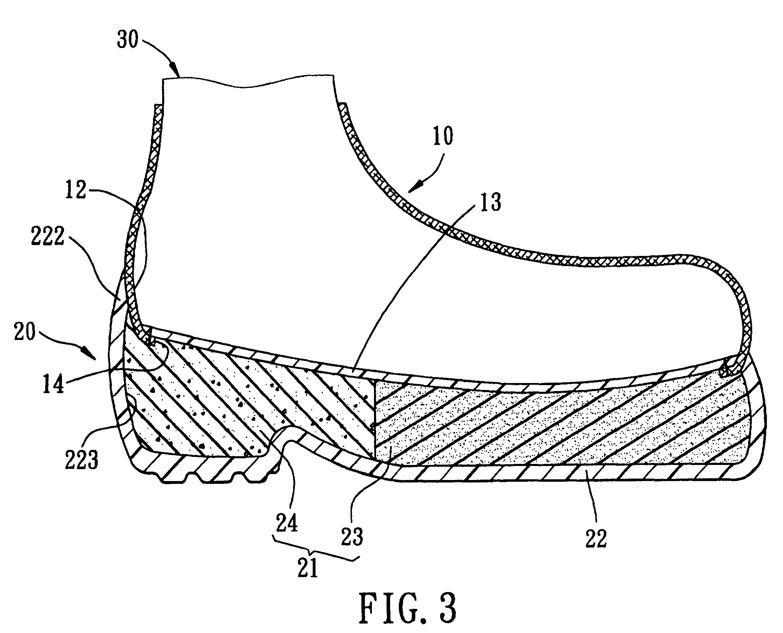

The thermoplastic skin 22 is preferably made from ethylene vinylacetate copolymer or thermoplastic urethane. The filler pad 21 can be made from plastic waste, such as polyurethane, ethylene vinylacetate copolymer, or rubber. Fig. 3 illustrates the structure of the filler pad 21 that includes a heel portion 24 and a toe portion 23 which are made from different materials that differ in elasticity.

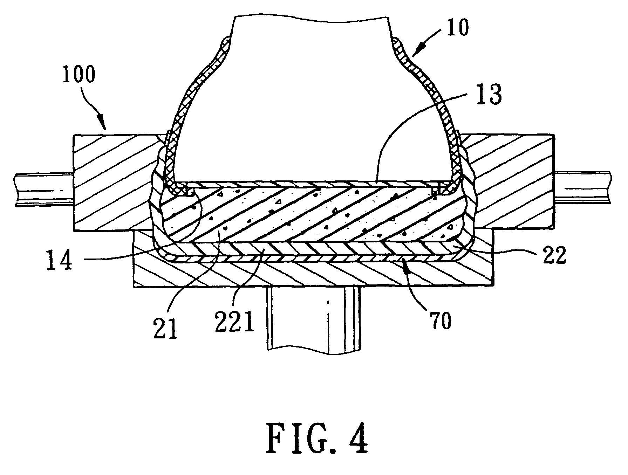

With reference to Fig. 4, a wear-resistant pad 70 can be attached to a bottom surface of the base wall 221 of the thermoplastic skin 22 in the mold 100 during the molding operation.

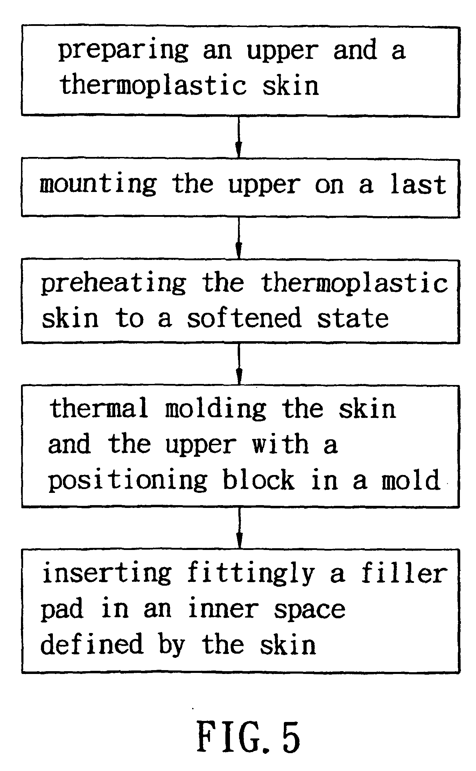

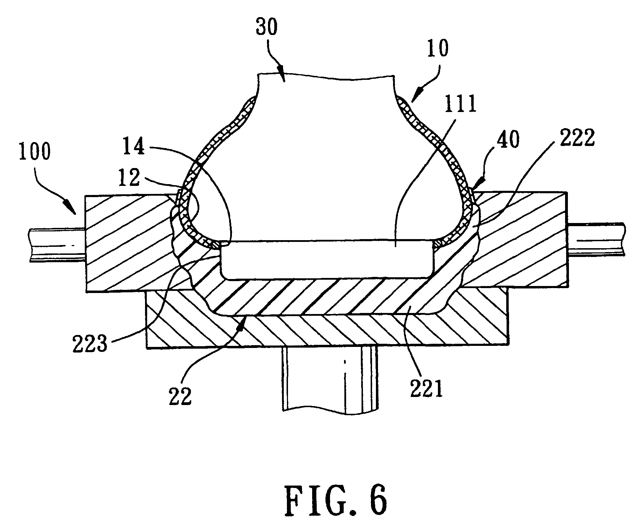

Fig. 5 is a block diagram showing consecutive steps of the second preferred embodiment of the method of this invention. With reference to Fig. 6, unlike the method of the previous embodiment, a positioning block 111 is placed in the inner space 223 in the thermoplastic skin 22 during the molding operation, and is removed from the mold 100 after the molding operation for insertion of the filler pad 21 through the bottom opening 14 into the inner space 223. The insole 13 is subsequently laid on an upper surface of the filler pad 21 and is connected to the bottom peripheral edge 12 of the upper 10 after the molding operation according to the method of this embodiment.

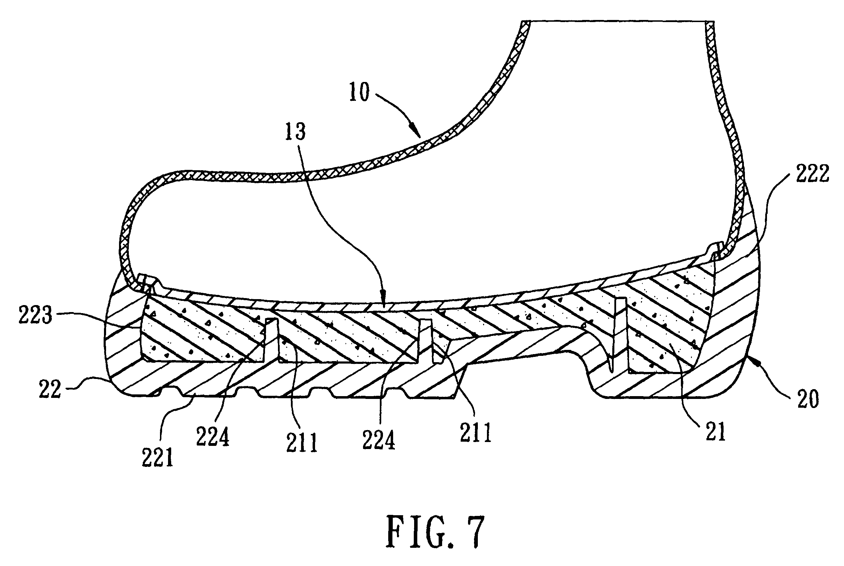

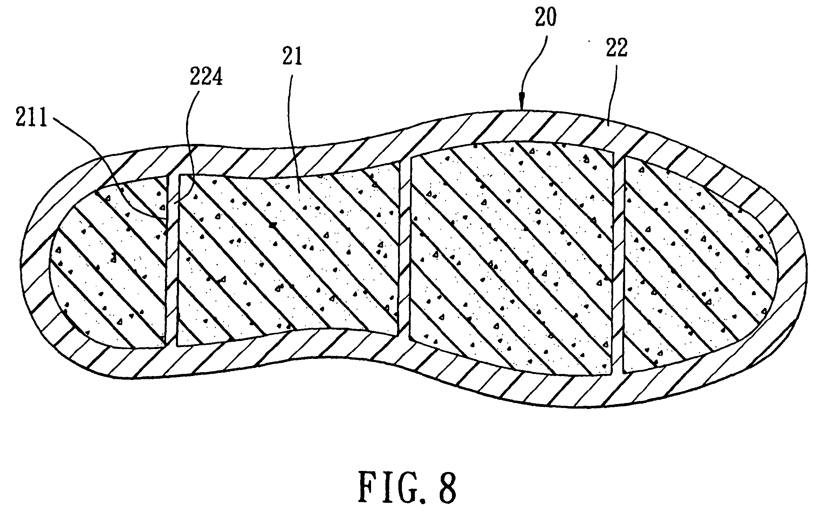

Figs. 7 and 8 illustrate the structure of the thermoplastic skin 22 that further includes a plurality of reinforcing ribs 224 formed on and projecting from the base wall 221 into the inner space 223. The filler pad 21 is formed with a plurality of grooves 211 for fittingly receiving the reinforcing ribs 224 so as to enhance the strength of the outsole 20.

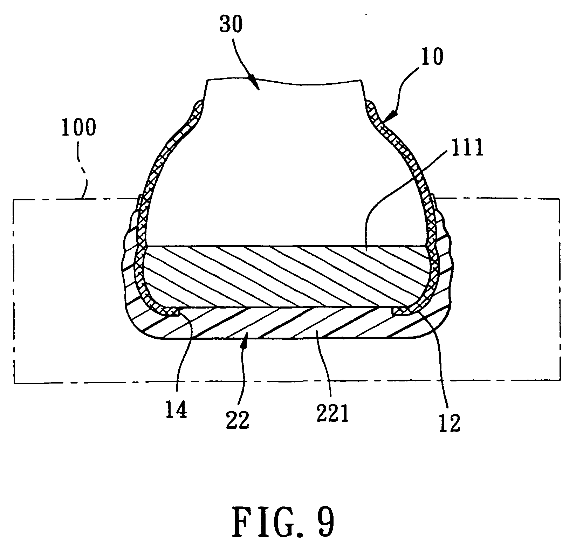

Fig. 9 illustrates the third preferred embodiment of the method of this invention. Unlike the second preferred embodiment, the bottom peripheral edge 12 of the upper 10 extends to the base wall 221 of the thermoplastic skin 22, and the positioning block 111 is laid on the bottom peripheral edge 12 of the upper 10 and the base wall 221 of the thermoplastic skin 22. Similar to the previous embodiment, a wear-resistant pad can be attached to the bottom surface of the base wall 221 of the thermoplastic skin 22.

Since the outsole 20 of the article of footwear is divided into the thermoplastic skin 22 and the filler pad 21, and since the thermoplastic skin 22 is relatively thin as compared to the filler pad 21 and is the only one that is required to be preheated prior to the molding operation, the manufacturing time of the article of footwear can be reduced as compared to the aforementioned conventional method of the prior art. In addition, the filler pad 21 made from plastic waste is advantageous and offers much benefit to the reduction of plastic waste.

## Claims

1. A method for making an article of footwear, comprising the steps of:
preparing an upper (10) that has a bottom peripheral edge (12);
preparing a thermoplastic skin (22) that has a base wall (221) and a peripheral wall (222) which extends from a periphery of said base wall (221) in a transverse direction relative to said base wall (221) and which confines an inner space (223) therein, said peripheral wall (222) having a shape that conforms to that of said bottom peripheral edge (12) of said upper (10);
preparing a filler pad (21) that has a shape conforming to that of said base wall (221);
mounting said upper (10) on a last (30);
preheating said thermoplastic skin (22) to a softened state; and
thermal molding said softened thermoplastic skin (22) together with an assembly of said filler pad (21) and said upper (10) in a mold (100) in such a manner that said peripheral wall (222) of said thermoplastic skin (22) is patterned and is bonded to said bottom peripheral edge (12) of said upper (10) and that said filler pad (21) is fittingly received in said inner space (223) and is bonded to said base wall (221) and said peripheral wall (222) of said thermoplastic skin (22).

2. The method of Claim 1, wherein said thermoplastic skin (22) is made from ethylene vinylacetate copolymer.

3. The method of Claim 1, wherein said thermoplastic skin (22) is made from thermoplastic polyurethane.

4. The method of Claim 1, wherein said filler pad (21) is made from plastic waste.

5. The method of Claim 1, further comprising attaching a wear-resistant pad (70) to a bottom surface of said base wall (221) in said mold (100) during the molding operation.

6. The method of Claim 1, further comprising binding an insole (13) to said bottom peripheral edge (12) of said upper (10) prior to the molding operation.

7. A method for making an article of footwear, comprising the steps of:
preparing an upper (10) that has a bottom peripheral edge (12) which confines a bottom opening (14);
preparing a thermoplastic skin (22) that has a base wall (221) and a peripheral wall (222) which extends from a periphery of said base wall (221) in a transverse direction relative to said base wall (221) and which confines an inner space (223) therein, said peripheral wall (222) having a shape that conforms to that of said bottom peripheral edge (12) of said upper (10);
preparing a filler pad (21) that has a shape conforming to that of said base wall (221);
mounting said upper (10) on a last (30);
preheating said thermoplastic skin (22) to a softened state;
thermal molding said softened thermoplastic skin (22) together with said upper (10) in a mold (100) in such a manner that said peripheral wall (222) of said thermoplastic skin (22) is patterned and is bonded to said bottom peripheral edge (12) of said upper (10);
cooling said mold (100) and removing an assembly of said upper (10) and said skin (22) from said mold (100); and
inserting fittingly said filler pad (21) in said inner space (223) through said bottom opening (14) in said upper (10).

8. The method of Claim 7, wherein said thermoplastic skin (22) is made from ethylene vinylacetate copolymer.

9. The method of Claim 7, wherein said thermoplastic skin (22) is made from thermoplastic polyurethane.

10. The method of Claim 7, wherein said filler pad (21) is made from plastic waste.

11. The method of Claim 7, further comprising laying an insole (13) on an upper surface of said filler pad (21), and connecting said insole (13) to said bottom peripheral edge (12) of said upper (10) after the molding operation.

## Patentansprüche

1. Verfahren zur Herstellung eines Schuhwerkes, das die folgenden Schritte aufweist:
Anfertigen eines Obermaterials (10), das einen unteren Umfangsrand (12) aufweist;
Anfertigen einer thermoplastischen Außenhülle (22), die eine Basiswand (221) und eine Umfangswand (222) aufweist, die sich vom Umfang der Basiswand (221) in einer Querrichtung relativ zur Basiswand (221) erstreckt, und die einen Innenraum (223) darin begrenzt, wobei die Umfangswand (222) eine Form aufweist, die sich an die des unteren Umfangsrandes (12) des Obermaterials (10) anpaßt;
Anfertigen eines Einlagepolsters (21), das eine Form aufweist, die sich an die der Basiswand (221) anpaßt;
Anbringen des Obermaterials (10) auf einem Leisten (30);
Vorwärmen der thermoplastischen Außenhülle (22) bis zu einem erweichten Zustand; und
thermisches Formen der erweichten thermoplastischen Außenhülle (22) zusammen mit einer Anordnung des Einlagepolsters (21) und des Obermaterials (10) in einer Form (100) in einer derartigen Weise, daß die Umfangswand (222) der thermoplastischen Außenhülle (22) gemustert und mit dem unteren Umfangsrand (12) des Obermaterials (10) verbunden wird, und daß das Einlagepolster (21) passend im Innenraum (223) aufgenommen und mit der Basiswand (221) und der Umfangswand (222) der thermoplastischen Außenhülle (22) verbunden wird.

2. Verfahren nach Anspruch 1, bei dem die thermoplastische Außenhülle (22) aus einem Ethylen-Vinylacetat-Copolymer besteht.

3. Verfahren nach Anspruch 1, bei dem die thermoplastische Außenhülle (22) aus einem thermoplastischen Polyurethan besteht.

4. Verfahren nach Anspruch 1, bei dem das Einlagepolster (21) aus Kunststoffabfall besteht.

5. Verfahren nach Anspruch 1, das außerdem das Befestigen eines verschleißfesten Polsters (70) an einer unteren Fläche der Basiswand (221) in der Form (100) während des Formvorganges aufweist.

6. Verfahren nach Anspruch 1, das außerdem das Binden einer Brandsohle (13) an den unteren Umfangsrand (12) des Obermaterials (10) vor dem Formvorgang aufweist.

7. Verfahren zur Herstellung eines Schuhwerkes, das die folgenden Schritte aufweist:
Anfertigen eines Obermaterials (10), das einen unteren Umfangsrand (12) aufweist, der eine untere Öffnung (14) begrenzt;
Anfertigen einer thermoplastischen Außenhülle (22), die eine Basiswand (221) und eine Umfangswand (222) aufweist, die sich vom Umfang der Basiswand (221) in einer Querrichtung relativ zur Basiswand (221) erstreckt, und die einen Innenraum (223) darin begrenzt, wobei die Umfangswand (222) eine Form aufweist, die sich an die des unteren Umfangsrandes (12) des Obermaterials (10) anpaßt;
Anfertigen eines Einlagepolsters (21), das eine Form aufweist, die sich an die der Basiswand (221) anpaßt;
Anbringen des Obermaterials (10) auf einem Leisten (30);
Vorwärmen der thermoplastischen Außenhülle (22) bis zu einem erweichten Zustand;
thermisches Formen der erweichten thermoplastischen Außenhülle (22) zusammen mit dem Obermaterial (10) in einer Form (100) in einer derartigen Weise, daß die Umfangswand (222) der thermoplastischen Außenhülle (22) gemustert und mit dem unteren Umfangsrand (12) des Obermaterials (10) verbunden wird;
Abkühlen der Form (140) und Entfernen einer Anordnung des Obermaterials (10) und der Außenhülle (22) aus der Form (100); und
Einsetzen des Einlagepolsters (21) in passender Weise in den Innenraum (223) durch die untere Öffnung (14) im Obermaterial (10).

8. Verfahren nach Anspruch 7, bei dem die thermoplastische Außenhülle (22) aus einem Ethylen-Vinylacetat-Copolymer besteht.

9. Verfahren nach Anspruch 7, bei dem die thermoplastische Außenhülle (22) aus einem thermoplastischen Polyurethan besteht.

10. Verfahren nach Anspruch 7, bei dem das Einlagepolster (21) aus Kunststoffabfall besteht.

11. Verfahren nach Anspruch 7, das außerdem das Legen einer Brandsohle (13) auf eine obere Fläche des Einlagepolsters (21) und das Verbinden der Brandsohle (13) mit dem unteren Umfangsrand (12) des Obermaterials (10) nach dem Formvorgang aufweist.

## Revendications

1. Procédé de fabrication d'un article chaussant, comprenant les étapes ci-dessous:
préparation d'une tige (10) comportant un bord périphérique inférieur (12);
préparation d'une peau thermoplastique (22) comportant une paroi de base (221) et une paroi périphérique (222) s'étendant à partir d'une périphérie de ladite paroi de base (221) dans une direction transversale par rapport à ladite paroi de base (221) et délimitant un espace interne correspondant (223), ladite paroi périphérique (222) ayant une forme adaptée à celle dudit bord périphérique inférieur (12) de ladite tige (10);
préparation d'un coussinet de rembourrage (21) ayant une forme adaptée à celle de ladite paroi de base (221);
montage de ladite tige (10) sur une forme (30);
préchauffage de ladite peau thermoplastique (22) en un état ramolli; et
moulage thermique de ladite peau thermoplastique ramollie (22) ensemble avec un assemblage dudit coussinet de rembourrage (21) et de ladite tige (10) dans un moule (100), de sorte que ladite paroi périphérique (222) de ladite peau thermoplastique (22) est configurée et reliée audit bord périphérique inférieur (12) de ladite tige (10), ledit coussinet de rembourrage (21) étant reçu par ajustement dans ledit espace interne (223) et étant relié à ladite paroi de base (221) et à ladite paroi périphérique (222) de ladite peau thermoplastique (22).

2. Procédé selon la revendication 1, dans lequel ladite peau thermoplastique (22) est composée d'un copolymère éthylène-acétate de vinyle.

3. Procédé selon la revendication 1, dans lequel ladite peau thermoplastique (22) est composée de polyuréthane thermoplastique.

4. Procédé selon la revendication 1, dans lequel ledit coussinet de rembourrage (21) est composé de chutes de plastique.

5. Procédé selon la revendication 1, comprenant en outre l'étape de fixation d'un coussinet résistant à l'usure (70) sur une surface inférieure de ladite paroi de base (221) dans ledit moule (100) au cours de l'opération de moulage.

6. Procédé selon la revendication 1, comprenant en outre la fixation d'une semelle intérieure (13) sur ledit bord périphérique inférieur (12) de ladite tige (10) avant l'opération de moulage.

7. Procédé de fabrication d'un article chaussant, comprenant les étapes ci-dessous:
préparation d'une tige (10) comportant un bord périphérique inférieur (12), délimitant une ouverture inférieure (14);
préparation d'une peau thermoplastique (22) comportant une paroi de base (221) et une paroi périphérique (222) s'étendant à partir d'une périphérie de ladite paroi de base (221) dans une direction transversale par rapport à ladite paroi de base (221) et délimitant un espace interne correspondant (223), ladite paroi périphérique (222) ayant une forme adaptée à celle dudit bord périphérique inférieur (12) de ladite tige (10);
préparation d'un coussinet de rembourrage (21) ayant une forme adaptée à celle de ladite paroi de base (221);
montage de ladite tige (10) sur une forme (30);
préchauffage de ladite peau thermoplastique (22) en un état ramolli; et
moulage thermique de ladite peau thermoplastique ramollie (22) ensemble avec ladite tige (10) dans un moule (100), de sorte que ladite paroi périphérique (222) de ladite peau thermoplastique (22) est configurée et reliée audit bord périphérique inférieur (12) de ladite tige (10);
refroidissement dudit moule (100) et retrait d'un assemblage de ladite tige (10) et de ladite peau (22) dudit moule; et
insertion par ajustement dudit coussinet de rembourrage (21) dans ledit espace interne (223) à travers ladite ouverture inférieure (14) dans ladite tige (10).

8. Procédé selon la revendication 7, dans lequel ladite peau thermoplastique (22) est composée d'un copolymère éthylène-acétate de vinyle.

9. Procédé selon la revendication 7, dans lequel ladite peau thermoplastique (22) est composée de polyuréthane thermoplastique.

10. Procédé selon la revendication 7, dans lequel ledit coussinet de rembourrage (21) est composé de chutes de plastique.

11. Procédé selon la revendication 7, comprenant en outre les étapes d'agencement d'une semelle intérieure (13) sur une surface supérieure dudit coussinet de rembourrage (21) et de connexion de ladite semelle intérieure (13) audit bord périphérique inférieur (12) de ladite tige (10) après l'opération de moulage.
